# FASCICULE DE BREVET EUROPEEN

(11) **EP 1 486 843 B1**
(45) Date de publication et mention de la délivrance du brevet: **23.07.2008**
(21) Numéro de dépôt: 04291444.0
(22) Date de dépôt: 09.06.2004
(51) Int. Cl.: G05D 23/02, G05D 23/13, F01P 7/16

(54) **Vanne thermostatique pour un circuit de circulation de fluide et moteur thermique muni d'un circuit de refroidissement comportant une telle vanne**
Thermostatventil für einen Flüssigkeitsströmungskreis und Verbrennungsmotor mit einem Flüssigkeitsströmungskreis, der diese Ventil beinhaltet
Thermostatic valve for a fluid circulation circuit and internal combustion engine provided with a fluid circulation circuit comprising such a valve

(30) Priorité: 11.06.2003 FR 0307023
(43) Date de publication de la demande: 15.12.2004
(73) Titulaire: VERNET S.A., 91291 Arpajon Cédex (FR)
(72) Inventeur: Bouloy, Alain, 91580 Etrechy (FR); Mabboux, Lionel, 91700 Sainte Genevieve des Bois (FR); Jure, Eddy, 92210 Saint Cloud (FR)
(74) Mandataire: Jacobson, Claude

(56) Documents cités:
- FR-A- 2 434 723
- FR-A- 2 557 632
- US-A- 4 875 437
- US-A- 5 427 062
- US-A1- 2002 096 130

## Description

La présente invention concerne une vanne thermostatique pour un circuit de circulation de fluide, comportant un manchon tubulaire en tant qu'obturateur pour réguler le passage d'un fluide traversant la vanne.

Ce genre de vanne est couramment employé dans des circuits de refroidissement associés à des moteurs thermiques de fortes cylindrées, notamment ceux équipant les camions ou certains véhicules automobiles, pour lesquels les débits de fluide de refroidissement nécessaires à leur fonctionnement sont plus élevés que ceux rencontrés pour des moteurs thermiques de cylindrées plus faibles, pour lesquels les vannes thermostatiques sont généralement à clapet.

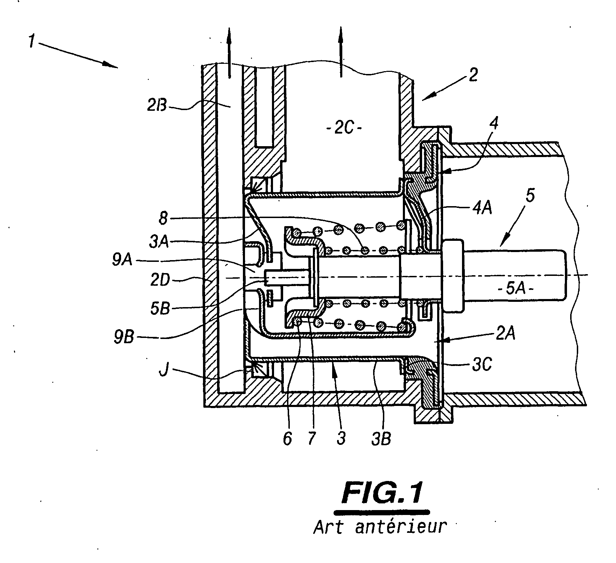

Sur la figure 1 est représentée une vanne connue 1 de ce type, diffusée sous la référence « DB 54 » par la société VERNET (France), qui comporte un boîtier 2 délimitant une entrée de fluide 2A et deux sorties de fluide 2B et 2C. Cette vanne est par exemple incorporée à un circuit de refroidissement de façon à ce que l'entrée 2A soit alimentée par un fluide de refroidissement provenant du moteur, la sortie 2B soit raccordée à une voie de retour direct du fluide vers le moteur et la sortie 2C soit raccordée à une voie de retour traversant un radiateur d'échange thermique. Pour réguler le passage du fluide entre l'entrée et l'une et/ou l'autre des sorties, la vanne 1 est munie d'un manchon tubulaire 3 dont le fond 3A est ajouré, la jupe 3B est pleine et le rebord libre 3C est évasé en forme de disque annulaire plan. La jupe 3 est guidée par un joint d'étanchéité J dans un orifice qui sépare les passages 2B et 2C.

Le rebord 3C est adapté pour venir en contact étanche contre un siège 4 solidaire du boîtier de façon à ce que, lorsque le manchon est appuyé contre le siège, le fluide entrant dans la vanne par l'entrée 2A soit dirigé, à l'intérieur du manchon, jusqu'à la sortie 2B et, lorsque le manchon est écarté de son siège, au moins une partie du fluide entrant se déverse autour du manchon pour être évacuée de la vanne par la sortie 2C.

Les déplacements du manchon 3 par rapport au siège 4 sont commandés par un élément thermostatique 5 dont le corps 5A est disposé sur le trajet d'écoulement du fluide, au niveau de l'entrée 2A, et dont le piston 5B est en butée sur un embout 9A lui-même solidarisé au fond 3A du manchon. Lorsque la température du fluide dans lequel baigne le corps 5A augmente, la cire dilatable que contient ce corps provoque le déplacement du piston 5B et l'entraînement du manchon. Un ressort 6 est interposé entre un étrier 9B solidaire de l'embout 9A et donc du manchon 3, et une pièce d'appui 7 solidaire du corps de l'élément thermostatique pour rappeler le manchon vers son siège lorsque la température du fluide diminue.

On comprend que lorsque la température du fluide entrant est très élevée, le déplacement du manchon 3 est tel qu'il vient buter contre une paroi 2D du boîtier 2 située sur le trajet du manchon. Pour éviter la détérioration de cette paroi et/ou de l'élément thermostatique 5, il est prévu que le corps 5A de l'élément thermostatique ne soit pas relié rigidement à des ponts 4A du siège 4, mais soit positionné par ces ponts tout en gardant une liberté de déplacement suivant la direction de déplacement du piston. Aussi, lorsque le manchon arrive en butée contre la paroi 2D, le piston s'immobilise par rapport au boîtier et le corps 5A s'éloigne du piston (vers la droite sur la figure 1). Pour rappeler le corps 5A et retenir les constituants de la vanne au repos, un ressort de sur-course 8 est prévu entre la pièce d'appui 7 et les ponts 4A du siège 4.

Bien que la vanne décrite ci-dessus soit satisfaisante, elle présente cependant l'inconvénient de ne pas être réglable une fois qu'elle est assemblée et incorporée à un circuit de refroidissement. En effet, la température pour laquelle le manchon va commencer à s'écarter de son siège, ainsi que le degré d'ouverture du passage entre l'entrée 2A et la sortie 2C, sont prédéterminés par l'élément thermostatique employé. Cet inconvénient est d'autant plus marqué lorsqu'on souhaite concevoir un circuit de refroidissement pour un véhicule destiné à circuler dans des conditions de fonctionnement variées, notamment selon la vitesse du véhicule et/ou la charge tractée par ce véhicule.

US-A-4 875 437 propose une vanne thermostatique à manchon, du type défini au préambule de la revendication 1 et présentant une possibilité de réglage de sa régulation. Grâce à un élément thermostatique auxiliaire dont le piston est lié fixement au piston de l'élément thermostatique principal de la vanne, la position du manchon de régulation, solidaire du corps de l'élément thermostatique principal, peut être ajustée dans le boîtier de vanne. Cependant, comme l'élément thermostatique auxiliaire déplace en totalité l'élément thermostatique principal, la souplesse d'utilisation de la vanne est limitée, notamment en incitant à prévoir une valeur relativement élevée pour la température de début d'actionnement de l'élément thermostatique principal.

FR-A-2 557 632 propose une vanne thermostatique dont le manchon est relié au piston d'un élément thermostatique par un ressort de surpression, tandis que le corps de cet élément thermostatique est immobilisé par rapport au boîtier de vanne, de sorte que cette vanne ne présente aucune possibilité de réglage de ses capacités de régulation thermostatique.

US-A-2002/096130 concerne un domaine plus éloigné, à savoir celui des vannes à clapet, et propose une vanne présentant une possibilité limitée d'ajustement de ses capacités de régulation : de manière analogue à l'enseignement de US-A-4 875 437 précité, un élément thermostatique auxiliaire agit, par l'intermédiaire d'un étrier, sur le corps d'un élément thermostatique principal, ce corps étant solidarisé au clapet de régulation.

US-A-5 427 062 propose, quant à lui, une vanne dont le manchon est commandé en déplacement par un système électronique incluant un moteur électrique, tandis que, en cas de défaillance de ce moteur, un élément thermostatique de sécurité, dont la position du corps n'est pas réglable, prend le relais.

Le but de la présente invention est de proposer une vanne du type décrit ci-dessus qui, tout en régulant des débits de fluide importants, présente une grande souplesse d'utilisation, en vue notamment d'ajuster les capacités de régulation de la vanne selon les conditions de fonctionnement du circuit de refroidissement dans laquelle elle est incorporée.

A cet effet, l'invention a pour objet une vanne pour un circuit de circulation de fluide, notamment un circuit de refroidissement associé à un moteur thermique, telle que définie à la revendication 1.

Les moyens d'entraînement de la vanne selon l'invention permettent de pouvoir déplacer de manière choisie le corps de l'élément thermostatique relativement au siège fixe, de façon à, en quelque sorte, augmenter la course du piston nécessaire pour que le manchon s'écarte de son siège. De la sorte, la température du fluide entrant pour laquelle le manchon est écarté de son siège, ainsi que les degrés d'écartement du manchon, sont réglables en fonctionnement, sans pour autant modifier la géométrie globale du boîtier de la vanne ou modifier la composition de la matière dilatable.

D'autres caractéristiques de cette vanne, prises isolément ou selon toutes les combinaisons techniquement possibles, sont énoncées aux revendications 2 à 9.

L'invention a également pour objet un moteur thermique associé à un circuit de circulation d'un fluide de refroidissement du moteur, lequel circuit comporte des moyens d'entraînement du fluide, des moyens d'échange thermique aptes à refroidir le fluide et une vanne telle que définie ci-dessus, ainsi que des moyens de raccordement entre la vanne et le moteur thermique, adaptés pour, en fonction de la position du manchon de régulation, envoyer au moins une partie du fluide de refroidissement vers le moteur après qu'elle ait traversée les moyens d'échange thermique

L'invention sera bien comprise à la lecture de la description qui va suivre, donnée uniquement à titre d'exemple et faite en se référant aux dessins sur lesquels :
- la figure 1 est une coupe longitudinale d'une vanne thermostatique selon l'art antérieur ;
- la figure 2 est une coupe longitudinale d'une vanne thermostatique selon l'invention, munie d'un élément de pilotage à matière dilatable et à commande électrique ;
- la figure 3 est une vue analogue à la figure 2, l'élément de pilotage étant retiré ;
- la figure 4 est une vue analogue à la figure 2, d'une variante d'une vanne selon l'invention munie d'un moteur électrique de pilotage ; et
- les figures 5 et 6 sont des schémas de circuits de refroidissement associés à un moteur thermique selon l'invention.

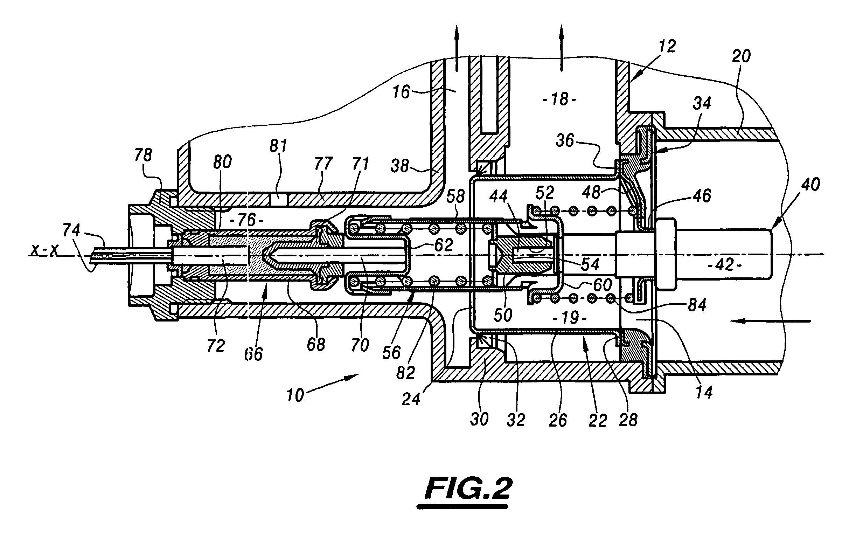

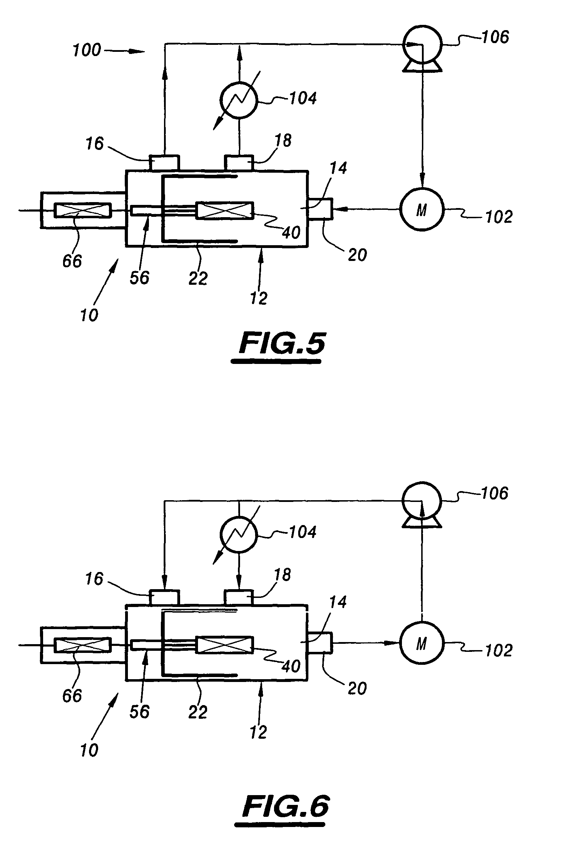

Sur la figure 2 est représentée une vanne 10 comportant un boîtier 12 qui délimite des orifices ou accès de fluide 14, 16 et 18 débouchant tous dans une chambre de régulation 19. La vanne 10 est adaptée pour réguler le passage d'un fluide entrant dans le boîtier 12 par l'accès 14 et ressortant de ce boîtier par l'un et/ou l'autre des accès 16 et 18. Comme représenté sur la figure 5, la vanne 10 est par exemple utilisée dans un circuit de refroidissement 100 d'un moteur de camion 102. Elle comporte à cet effet un conduit tubulaire d'entrée 20 rapporté sur le boîtier 12 au niveau de l'accès d'entrée 14, adapté pour alimenter avec un liquide de refroidissement provenant du moteur, la vanne 10. Celle-ci, sous certaines conditions détaillées ci-après, régule le fluide entrant en envoyant l'essentiel ou une partie seulement de ce fluide vers l'accès de sortie 16 raccordée à une voie de retour direct vers le moteur (appelée également voie de « by-pass ») munie d'une pompe d'entraînement 106 et/ou vers l'accès de sortie 18 raccordé à une voie qui, avant d'atteindre le moteur, traverse un échangeur thermique 104 qui refroidit le fluide, tel qu'un radiateur.

Pour réguler le passage du fluide vers les accès de sortie 16 et 18, la vanne 10 est équipée d'un manchon tubulaire 22 d'axe X-X, comprenant un fond ajouré 24 et une jupe cylindrique pleine 26 qui forme, à son extrémité libre, un rebord annulaire extérieur 28. Le manchon 22 est monté coulissant suivant son axe X-X à l'intérieur du boîtier 12. Il est guidé par une partie de paroi cylindrique 30 du boîtier qui entoure le manchon à proximité de son fond ajouré 24, avec interposition d'une garniture d'étanchéité 32. Les accès de sortie de fluide 16 et 18 s'étendent de part et d'autre, suivant l'axe X-X, de cette partie de paroi 30.

Un siège 34, s'étendant en travers de l'accès d'entrée 14, est pincé entre le boîtier 12 et le conduit rapporté 20. Du côté tourné vers l'intérieur du boîtier 12, le siège 34 présente une surface annulaire 36 formant une zone d'appui étanche pour le rebord évasé 28 du manchon 22.

Le manchon 22 est déplaçable entre une position en appui sur le siège 34, tel que représenté sur la figure 2, dans laquelle le fluide entrant dans le boîtier 12 à travers l'accès 14 est envoyé, à travers le fond ajouré 24, jusqu'à l'accès de sortie 16, et une position écartée du siège, dans laquelle le fluide entrant s'écoule, au moins pour partie, autour du manchon 22 pour alimenter l'accès de sortie 18. Le manchon est déplaçable de la sorte jusqu'à une position écartée extrême dans laquelle le fond 24 du manchon vient en appui contre une paroi 38 du boîtier située en face du siège 34. Dans cette position extrême, la jupe pleine 26 du manchon, le joint d'étanchéité 32 et cette paroi 38, qui forme en quelque sorte un second siège pour le manchon, empêchent au moins l'essentiel du fluide circulant dans la vanne d'alimenter l'accès de sortie 16, au profit de l'accès de sortie 18.

En vue, sous certaines conditions détaillées plus loin, de déplacer le manchon 22 en translation le long de l'axe X-X, la vanne 10 est équipée d'un élément thermostatique 40 comprenant essentiellement un corps 42 et un piston 44 sous la forme d'une tige mobile par rapport au corps. Plus précisément, le corps 42 est adapté pour contenir une cire dilatable. Il s'étend de façon sensiblement co-axiale à l'axe X-X et est positionné dans la vanne 10 par une couronne 46 formée par les extrémités libres de pontets radiaux 48 du siège 34.

Une partie d'extrémité du piston 44 plonge dans le corps 42 où elle s'appuie sur la cire dilatable contenue dans le corps 42, avec interposition d'une membrane élastique. Sa partie d'extrémité opposée est reliée au fond 24 du manchon 22 par un embout 50 solidaire du fond 24. Plus précisément, le piston 44 est reçu à l'intérieur d'une cavité borgne 52 de l'embout de liaison 50, dont les parois latérales sont en contact glissant avec le piston et dont le fond 54 forme une zone d'appui, suivant l'axe X-X, pour le piston.

La vanne 10 comporte en outre un étrier rigide 56 de forme allongée, solidaire du corps 42, qui s'étend suivant l'axe X-X. Cet étrier comporte au moins deux branches diamétralement opposées 58, parallèles à l'axe X-X. En variante non représentée, une seule branche peut être prévue ou les deux branches sont remplacées par une pièce tubulaire. Les branches 58 s'étendent à travers le fond ajouré 24 du manchon 22. Leurs parties d'extrémité logées à l'intérieur du manchon 22 se rejoignent en formant une couronne annulaire 60 solidarisée au corps 42 de l'élément thermostatique. Cette couronne est par exemple retenue à l'intérieur d'une gorge périphérique annulaire ménagée dans la paroi extérieure du corps 42.

Les parties d'extrémité des banches 58 situées à l'extérieur du manchon 22 sont reliées par une coupelle rigide 62, co-axiale à l'axe X-X. Les branches 58, la couronne 60 et la coupelle 62 de l'étrier 56 forment un ensemble d'un seul tenant, ces différents éléments étant par exemple solidarisés par sertissage.

L'étrier 58 est adapté pour coopérer avec un autre élément thermostatique 66 coaxial à l'axe X-X et comprenant un corps 68 et un piston 70. Le corps 68 contient une cire dilatable à l'intérieur de laquelle plonge une extrémité du piston 70, avec interposition d'une membrane élastique 71. L'extrémité libre du piston est reçue à l'intérieur de la coupelle 62, le chant d'extrémité du piston venant en appui direct sur la coupelle.

Du côté opposé au piston 70, le corps 68 de l'élément thermostatique 66 est traversé par des moyens de chauffage de la cire dilatable, se présentant sous la forme d'une résistance chauffante électrique 72 dont les plots 74 sont adaptés pour être connectés à une source d'alimentation électrique non représentée.

L'élément thermostatique 66 et la partie de l'étrier 56 disposée à l'extérieur du manchon 22 sont logés à l'intérieur d'une cavité 76 qui s'étend suivant l'axe X-X, qui est délimitée par un prolongement tubulaire 77 du boîtier 12 raccordé à la paroi 38 et qui débouche dans la chambre de régulation 19. A son extrémité opposée à celle débouchant dans la chambre, la cavité 76 est fermée de façon étanche par un capuchon 78, par exemple vissé sur la face interne du prolongement 77. Ce capuchon présente intérieurement un alésage central 80 qui, du côté tourné vers la chambre de régulation, reçoit de façon étanche le corps 68 de l'élément thermostatique 66, et qui, du côté opposé, est adapté pour laisser passer les plots 74 de connexion électrique de la résistance chauffante 72.

La paroi du prolongement 77 est avantageusement munie d'un trou traversant 81 destiné à éviter toute zone de stagnation de fluide dans la cavité 76 autour de l'élément 66.

La vanne 10 comporte en outre un premier ressort hélicoïdal 82, co-axial à l'axe X-X, interposé entre la coupelle 62 et le fond 24 du manchon 22, ainsi qu'un second ressort hélicoïdal 84, co-axial à l'axe X-X, interposé entre la couronne 60 et les pontets 48 du siège 34.

Le fonctionnement de la vanne thermostatique 10 est le suivant :

En considérant dans un premier temps que l'élément thermostatique 66 est inactif, l'élévation de la température du fluide dans lequel baigne le corps 42 de l'élément thermostatique 40 provoque la dilatation de la cire que ce corps contient, chassant à l'extérieur du corps le piston 44. Ce piston entraîne alors suivant un mouvement de translation selon l'axe X-X le manchon 22, l'effort d'entraînement étant transmis au fond 24 du manchon par l'embout 50. Le manchon passe alors de sa position en appui sur le siège 34, représentée sur la figure 2, à une position écartée de ce siège, provoquant la répartition du fluide entrant entre les sorties 16 et 18. L'étrier 56 étant considéré fixe par rapport au boîtier 12, le déplacement du manchon provoque également la compression du ressort 82.

Si la température du fluide entrant continue d'augmenter, le piston 42 déplace le manchon 22 jusqu'à ce qu'il vienne en appui contre la paroi 38 du boîtier 12, obligeant alors la quasi-totalité du fluide entrant à sortir du boîtier 12 par la sortie 18. Si la température du fluide entrant continue encore d'augmenter, dans la mesure où le piston 44 ne peut plus se déplacer par rapport au boîtier 12, le corps 42 est déplacé, vis-à-vis du piston, dans une direction opposée à celle suivie auparavant par le piston 44 par rapport au corps 42, c'est-à-dire vers la droite sur la figure 2. Le corps 42 est alors guidé en translation par la couronne 46, et le ressort 84 est comprimé entre les pontets du siège fixe et la couronne 60 solidaire du corps 42.

Lorsque la température du fluide diminue, le corps 42 est d'abord ramené par rapport au boîtier dans sa position de la figure 2 par le ressort 84, qui fait office de ressort de sur-course pour le corps 42. Puis, si la température du fiuide entrant continue de diminuer, le manchon 22 est rappelé vers le siège 34 par le ressort 82.

Indépendamment du fonctionnement décrit ci-dessus basé sur l'influence de la variation de la température du fluide entrant dans le boîtier 12 sur l'élément thermostatique 40, la position selon l'axe X-X du corps 42 de l'élément thermostatique 40 est réglable au moyen de l'étrier rigide 56 et de l'élément thermostatique 66. En commandant l'alimentation électrique de la résistance chauffante 72, le piston 70 est chassé du corps 68 sous l'effet de la cire dilatée et entraîne alors l'étrier 56 en translation suivant l'axe X-X, dans une direction opposée à la direction de déplacement du piston 44 lorsque la température du fluide entrant augmente. L'étrier 56 étant relié rigidement au corps 42 de l'élément thermostatique 40, le déplacement de l'étrier provoque le déplacement correspondant du corps 42 guidé en translation par la couronne 46.

Le mouvement de l'étrier 56 est transmis, d'une part, de façon rigide au corps de l'élément thermostatique 40, et d'autre part, de façon élastique par l'intermédiaire du ressort 82 au manchon 22. Par l'intermédiaire de l'embout 50, la position du manchon 22 est déterminée par la butée sur le chant du piston 44, sauf quand son extrémité évasée 28 est déjà en butée sur le siège 34, ce qui provoque alors le glissement du piston 44 le long de la paroi de la cavité 52 de l'embout 50.

On comprend que la vanne 10 offre une plus grande souplesse d'utilisation que les vannes de l'art antérieur, notamment celle de la figure 1. En particulier, grâce à l'étrier rigide 56, il est possible de déplacer par rapport au boîtier 12 le corps 42 de l'élément thermostatique de façon à changer la température du fluide entrant pour laquelle le manchon 22 est écarté de son siège 34, ainsi que l'importance de cet écartement. Par exemple, en partant de l'état de la figure 2 de la vanne 10, le déplacement de l'étrier 56 suivant un mouvement de translation suivant l'axe X-X de façon à éloigner de la paroi 38 le corps 42 de l'élément thermostatique 40, permet de ménager un jeu entre l'extrémité libre du piston 44 et le fond 54 de la cavité 52 de l'embout 50. Dans ces conditions, lorsque la température du fluide dans laquelle baigne le corps 42 augmente, le piston 44 va, dans un premier temps, se déployer à l'extérieur du corps 42 en comblant le jeu précité, avant, seulement dans un second temps, de provoquer l'écartement du manchon 22 vis-à-vis de son siège 34.

On pilote ainsi le manchon 22 : lorsque le moteur 102 est relativement peu sollicité, on commande l'étrier 56 de façon à ce que la température du fluide entrant pour laquelle le manchon est écarté de son siège soit importante, tandis que lorsque le moteur est fortement sollicité, dû notamment à la charge tractée par ce véhicule, la température du fluide entrant pour laquelle le manchon commande l'envoi de fluide vers l'échangeur thermique 104 est abaissée. Le pilotage correspondant de l'étrier est assuré par des moyens de commande électroniques appropriés.

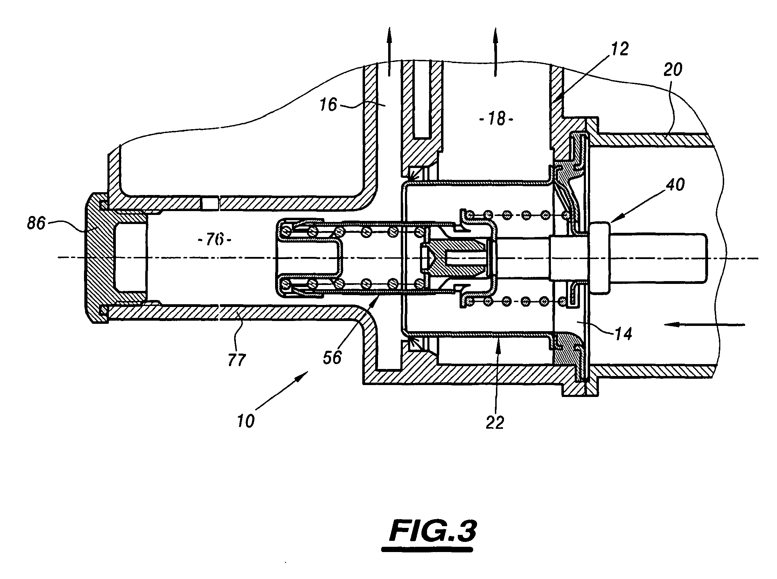

Sur la figure 3 est représentée la vanne 10 dépourvue de l'élément thermostatique 66. Le capuchon de fermeture 78 est remplacé par un bouchon 86 rapporté de façon étanche sur la partie 77 du boîtier 12. Ce bouchon 86 permet d'utiliser la vanne 10 sans commander le déplacement de l'étrier 56. En d'autres termes, en l'absence de l'élément thermostatique 66, la vanne 10 fonctionne sensiblement comme la vanne 1 de l'art antérieur, représentée sur la figure 1.

La vanne 10 selon l'invention passe ainsi facilement d'une utilisation sans commande du déplacement de l'étrier 56, soit en cas d'absence de l'élément de pilotage 66, soit en cas de coupure de son alimentation électrique, à une utilisation permettant le pilotage du manchon 22, comme expliqué précédemment.

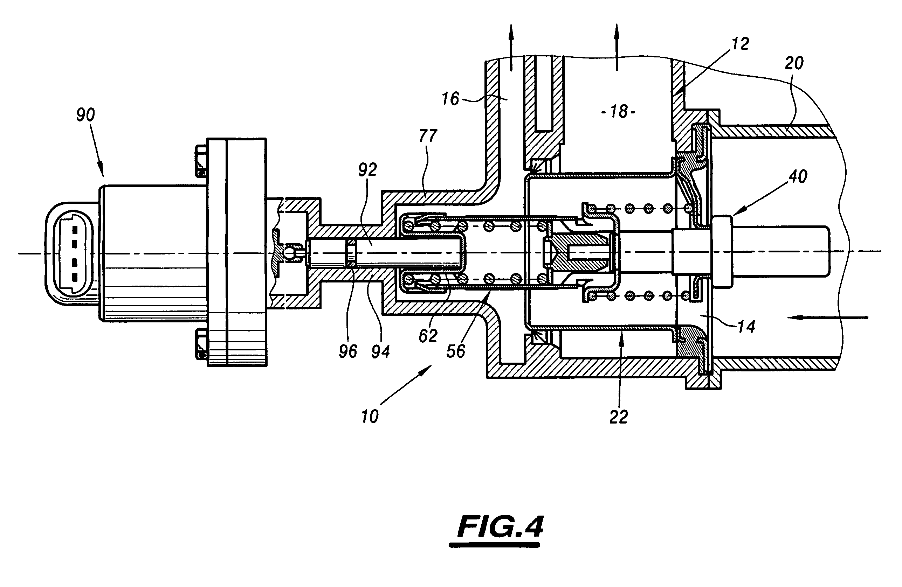

Sur la figure 4 est représentée une variante de la vanne 10, qui se distingue essentiellement de cette dernière par la forme de la partie 77 du boîtier 12, ainsi que par la nature des moyens de commande du déplacement de l'étrier 56. Plus précisément, par rapport à la vanne de la figure 2, l'élément thermostatique 66 est remplacé par un moteur électrique réversible pas à pas 90 équipé d'une tige de sortie 92 venant en appui sur la coupelle 62 de l'étrier 56. La tige 92 s'étend co-axialement à l'axe X-X et est guidée en translation par un tronçon 94 de la partie 77, de plus faible diamètre. Avantageusement, ce tronçon 94 est de section interne complémentaire de la section de la tige 92, avec interposition entre ces deux éléments d'un joint d'étanchéité 96.

Le fonctionnement de cette variante de la vanne 10 est sensiblement analogue à celui décrit plus haut.

De la même façon que pour l'élément thermostatique 66 et le capuchon 78, le moteur 90 est monté de façon amovible sur le boîtier 12, de sorte qu'il peut être retiré et remplacé par un bouchon de fermeture analogue au bouchon 86 représenté sur la figure 3, permettant ainsi pour la variante de la vanne de la figure 4 de passer d'une utilisation avec pilotage du manchon 22 à une utilisation sans commande du déplacement de l'étrier 56.

Divers aménagements aux vannes selon l'invention décrites ci-dessus sont en outre envisageables. A titre d'exemple, la disposition relative des accès 14, 16 et 18 n'est pas limitée à celle représentée mais peut au contraire satisfaire à des exigences variées d'intégration au sein d'un circuit de refroidissement ou de chauffage de fluide, notamment dans des plans respectifs sensiblement orthogonaux. De même, la paroi 20 et celles délimitant les orifices 16 et 18 peuvent en fonction des configurations du circuit dans lequel la vanne est intégré, par exemple au sein d'un moteur thermique, être parties intégrantes de composants du circuit de refroidissement, tels que le corps d'une pompe à eau ou un boîtier de distribution.

Par ailleurs, la vanne selon l'invention est utilisable dans des circuits de refroidissement avec, comme décrit jusqu'ici, une entrée de fluide 14 et des sorties 16 et 18, mais également avec des sens de flux inversés, c'est-à-dire deux entrées 16 et 18 et une seule sortie en 14. Dans ce cas, comme par exemple schématiquement représenté sur la figure 6, l'orifice 16 est raccordé à une voie de by-pass dans laquelle le fluide provient directement de l'évacuation du moteur 102, l'orifice 18 est raccordé à la sortie de l'échangeur thermique 104 alimenté par l'évacuation du moteur, et l'orifice 14 évacue le fluide vers le moteur. L'élément thermostatique de la vanne, dont le corps est disposé au niveau du premier accès d'entrée, commande alors les déplacements du manchon de façon à ce qu'il obture ou non le second accès d'entrée selon la température du fluide dans la voie de by-pass.

## Revendications

1. Vanne thermostatique pour un circuit de circulation de fluide, notamment un circuit de refroidissement associé à un moteur thermique, du type comportant :
- un boîtier (12) qui délimite une chambre (19) de régulation d'un fluide du circuit de circulation,
- un manchon (22) de régulation du passage du fluide entre, d'une part, un premier orifice (14) de circulation du fluide, qui débouche dans la chambre (19), et, d'autre part, un deuxième (16) et/ou un troisième (18) orifices de circulation du fluide, qui débouchent dans la chambre, le manchon étant mobile par rapport au boîtier (12),
- un siège (34) d'appui du manchon (22), fixe par rapport au boîtier (12), et
- un élément thermostatique (40) qui comprend, d'une part, un corps (42) disposé suivant le trajet d'écoulement du fluide dans la vanne, au niveau du premier orifice (14), et contenant une matière dilatable et, d'autre part, un piston (44) mobile par rapport au corps sous l'action de la matière dilatable,
**caractérisée en ce que** le manchon (22) est monté sur le piston (44) de l'élément thermostatique (40) par l'intermédiaire d'un embout (50) adapté pour ménager une course morte, les déplacements relatifs entre le manchon et le siège (34) étant commandés par les déplacements relatifs entre le piston et le corps (42) de l'élément thermostatique lorsque la course morte entre le piston et le manchon est comblée,
et **en ce qu'**elle comporte en outre des moyens commandés (56, 66 ; 56, 90) d'entraînement, suivant la direction de déplacement du piston, du corps de l'élément thermostatique pour augmenter la course morte, ces moyens d'entraînement comprenant un étrier rigide (56) muni d'une première partie d'extrémité (60) solidarisée au corps de l'élément thermostatique et d'une seconde partie d'extrémité opposée (62) située, vis-à-vis dudit corps, du même côté que le piston de l'élément thermostatique, et adaptée pour être reliée à un dispositif (66 ; 90) d'entraînement en translation suivant la direction de déplacement du piston.

2. Vanne suivant la revendication 1, **caractérisée en ce que** les moyens d'entraînement (56, 66 ; 56, 90) sont disposés au moins en partie à l'intérieur du manchon (22).

3. Vanne suivant l'une des revendications 1 ou 2, **caractérisée en ce qu'**elle comporte des moyens (84) de rappel du corps (42) de l'élément thermostatique (40), interposés entre les moyens d'entraînement (56, 66 ; 56, 90) et le siège (34).

4. Vanne suivant la revendication 3, **caractérisée en ce que** la seconde partie d'extrémité (62) de l'étrier rigide (56) porte une surface d'appui pour un actionneur (70; 92) du dispositif d'entraînement (66 ; 90), et **en ce que** les moyens (84) de rappel du corps (42) de l'élément thermostatique (40) sont interposés entre la première partie d'extrémité (60) de l'étrier (56) et le siège (34) de façon à appliquer ladite surface d'appui contre l'actionneur.

5. Vanne suivant l'une quelconque des revendications précédentes, **caractérisée en ce que** le piston (44) de l'élément thermostatique (40) commande en déplacement le manchon (22) de façon à ce que le manchon s'écarte du siège (34), et **en ce que** des moyens associés (82) de rappel du manchon vers son siège sont interposés entre la seconde partie d'extrémité (62) de l'étrier rigide (56) et le manchon.

6. Vanne suivant l'une quelconque des revendications précédentes, **caractérisée en ce que** les moyens d'entraînement comportent un dispositif d'entraînement choisi parmi un élément thermostatique (66) à commande par des moyens de chauffage ou un moteur électrique réversible (90).

7. Vanne suivant l'une quelconque des revendications précédentes, **caractérisée en ce que** le boîtier (12) délimite une cavité (76) débouchant sur une paroi (38) du boîtier qui forme une surface d'arrêt pour le manchon (22), ladite cavité (76) étant adaptée pour recevoir au moins en partie les moyens d'entraînement (56, 66 ; 56, 90).

8. Vanne suivant la revendication 7, **caractérisée en ce que** la seconde partie d'extrémité (62) de l'étrier rigide (56) est logée dans la cavité (76).

9. Vanne suivant l'une des revendications 7 ou 8, **caractérisée en ce que** la paroi (77) du boîtier (12) délimitant la cavité (76) présente une ouverture traversante adaptée pour recevoir de façon amovible une partie fixe du dispositif d'entraînement (66 ; 90) ou un bouchon (86).

10. Moteur thermique muni d'un circuit de circulation d'un fluide de refroidissement du moteur, lequel circuit (100) comporte des moyens (106) d'entraînement du fluide, des moyens (104) d'échange thermique aptes à refroidir le fluide et une vanne (10) conforme à l'une quelconque des revendications précédentes, ainsi que des moyens de raccordement entre la vanne et le moteur thermique (102), adaptés pour, en fonction de la position du manchon de régulation (22), envoyer au moins une partie du fluide de refroidissement vers le moteur après qu'elle ait traversé les moyens d'échange thermique.

## Claims

1. Thermostatic valve for a fluid circulation circuit, in particular a cooling circuit of an internal combustion engine, of the type comprising:
- a housing (12) which defines a chamber (19) for regulating a fluid in the circulation circuit;
- a sleeve (22) for regulating the passage of the fluid between, on the one hand, a first fluid circulation orifice (14) which opens into the chamber (19) and, on the other hand, a second (16) and/or a third (18) fluid circulation orifice which open(s) into the chamber, the sleeve being able to move in relation to the housing (12);
- a bearing seat (34) for the sleeve (22), fixed in relation to the housing (12); and
- a thermostatic element (40) which comprises, on the one hand, a body (42) placed along the flow path of the fluid through the valve, at the first orifice (14) and containing a dilatable material, and, on the other hand, a piston (44) which is able to move in relation to the body under the action of the dilatable material,
**characterized in that** the sleeve (22) is mounted on the piston (44) of the thermostatic element (40) via an end fitting (50) suitable for providing a dead travel, the relative movements between the sleeve and the seat (34) being controlled by the relative movements between the piston and the body (42) of the thermostatic element when the dead travel between the piston and the sleeve is accomplished,
and **in that** it also comprises controlled drive means (56, 66; 56, 90), for driving, in the direction of movement of the piston, the body of the thermostatic element in order to increase the dead travel, these drive means comprising a rigid yoke (56), a first end part (60) of which is secured to the body of the thermostatic element and a second opposite end part (62) of which is situated, with regard to the said body, on the same side as the piston of the thermostatic element and can be connected to a drive device (66; 90) for translational driving in the direction of movement of the piston.

2. Valve according to Claim 1, **characterized in that** the drive means (56, 66; 56, 90) are arranged at least partly inside the sleeve (22).

3. Valve according to either of Claims 1 and 2, **characterized in that** it includes return means (84), for the body (42) of the thermostatic element (40), which are inserted between the drive means (56, 66; 56, 90) and the seat (34).

4. Valve according to Claim 3, **characterized in that** the second end part (62) of the rigid yoke (56) has a bearing surface for an actuator (70; 92) of the drive device (66; 90) and **in that** the return means (84) for the body (42) of the thermostatic element (40) are inserted between the first end part (60) of the yoke (56) and the seat (34) so that the said bearing surface bears against the actuator.

5. Valve according to any one of the preceding claims, **characterized in that** the piston (44) of the thermostatic element (40) controls the movement of the sleeve (22) such that the sleeve moves away from the seat (34) and **in that** the associated means (82) for returning the sleeve towards its seat are inserted between the second end part (62) of the rigid yoke (56) and the sleeve.

6. Valve according to any one of the preceding claims, **characterized in that** the drive means include a drive device selected from a thermostatic element (66) controlled by heating means or a reversible electric motor (90).

7. Valve according to any one of the preceding claims, **characterized in that** the housing (12) defines a cavity (76) opening onto a wall (38) of the housing that forms a stop surface for the sleeve (22), the said cavity (76) being designed to at least partly receive the drive means (56, 66; 56, 90).

8. Valve according to Claim 7, **characterized in that** the second end part (62) of the rigid yoke (56) is housed inside the cavity (76).

9. Valve according to either of Claims 7 and 8, **characterized in that** the wall (77) of the housing (12) defining the cavity (76) has a through-opening designed to receive, in a removable manner, a fixed part of the drive device (66; 90) or a stopper (86).

10. Internal combustion engine provided with a fluid circulation circuit for cooling the engine, the said circuit (100) including fluid drive means (106), heat exchange means (104) for cooling the fluid and a valve (10) according to any one of the preceding claims, and also means for connecting the valve and the internal combustion engine (102) together, which are designed, depending on the position of the regulation sleeve (22), to send at least some of the cooling fluid towards the engine once it has passed through the heat exchange means.

## Patentansprüche

1. Thermostatventil für einen Fluidumlaufkreis, insbesondere einen einer Wärmekraftmaschine zugeordneten Kühlkreis, umfassend:
- ein Gehäuse (12), das eine Kammer (19) zur Regelung eines Fluids des Umlaufkreises begrenzt,
- eine Buchse (22) zur Regelung des Durchgangs des Fluids zwischen einerseits einer ersten Öffnung (14) für den Umlauf des Fluids, die in die Kammer (19) mündet, und andererseits einer zweiten (16) und/oder dritten (18) Öffnung für den Umlauf des Fluids, die in die Kammer münden, wobei die Buchse bezüglich des Gehäuses (12) beweglich ist,
- einen bezüglich des Gehäuses (12) feststehenden Sitz (34) zur Auflage der Buchse (22) und
- ein Thermostatelement (40), das einerseits einen Körper (42) umfasst, der auf Höhe der ersten Öffnung (14) in dem Strömungsweg des Fluids in dem Ventil angeordnet ist und ein ausdehnbares Material enthält, und andererseits einen Kolben (44), der bezüglich des Körpers unter der Wirkung des ausdehnbaren Materials beweglich ist,
**dadurch gekennzeichnet, dass** die Buchse (22) auf dem Kolben (44) des Thermostatelements (40) über einen Ansatz (50) montiert ist, der dafür ausgelegt ist, einen toten Weg zu liefern, wobei die Relativbewegungen zwischen der Buchse und dem Sitz (34) durch die Relativbewegungen zwischen dem Kolben und dem Körper (42) des Thermostatelements gesteuert werden, wenn der tote Weg zwischen dem Kolben und der Buchse durchlaufen ist,
und dass es außerdem Steuermittel (56, 66; 56, 90) zum Antrieb des Körpers des Thermostatelements in der Bewegungsrichtung des Kolbens umfasst, um den toten Weg zu vergrößern, wobei diese Antriebsmittel einen starren Bügel (56) umfassen, der mit einem ersten Endteil (60) versehen ist, der mit dem Körper des Thermostatelements fest verbunden ist, und mit einem entgegengesetzten zweiten Endteil (62), der gegenüber dem Körper auf derselben Seite wie der Kolben des Thermostatelements gelegen ist und dafür ausgelegt ist, mit einer Vorrichtung (66; 90) zum Antrieb in Translation in der Bewegungsrichtung des Kolbens verbunden zu sein.

2. Ventil nach Anspruch 1, **dadurch gekennzeichnet, dass** die Antriebsmittel (56, 66; 56, 90) mindestens zum Teil im Inneren der Buchse (22) angeordnet sind.

3. Ventil nach einem der Ansprüche 1 oder 2, **dadurch gekennzeichnet, dass** es Mittel (84) zur Rückholung des Körpers (42) des Thermostatelements (40) umfasst, die zwischen die Antriebsmittel (56, 66; 56, 90) und den Sitz (34) eingesetzt sind.

4. Ventil nach Anspruch 3, **dadurch gekennzeichnet, dass** der zweite Endteil (62) des starren Bügels (56) eine Auflagefläche für ein Betätigungselement (70; 92) der Antriebsvorrichtung (66; 90) trägt, und dass die Mittel (84) zur Rückholung des Körpers (42) des Thermostatelements (40) zwischen den ersten Endteil (60) des Bügels (56) und den Sitz (34) eingesetzt sind, so dass die Auflagefläche an das Betätigungselement angedrückt wird.

5. Ventil nach einem der vorhergehenden Ansprüche, **dadurch gekennzeichnet, dass** der Kolben (44) des Thermostatelements (40) die Buchse (22) in ihrer Bewegung so steuert, dass die Buchse sich von dem Sitz (34) entfernt, und dass zugeordnete Mittel (82) zur Rückholung der Buchse zu ihrem Sitz zwischen den zweiten Endteil (62) des starren Bügels (56) und die Buchse eingesetzt sind.

6. Ventil nach einem der vorhergehenden Ansprüche, **dadurch gekennzeichnet, dass** die Antriebsmittel eine Antriebsvorrichtung umfassen, die aus einem Thermostatelement (66) mit Steuerung durch Heizmittel oder einem reversiblen Elektromotor (90) ausgewählt ist.

7. Ventil nach einem der vorhergehenden Ansprüche, **dadurch gekennzeichnet, dass** das Gehäuse (12) einen Hohlraum (76) begrenzt, der an einer Wand (38) des Gehäuses ausmündet, die eine Stoppfläche für die Buchse (22) bildet, wobei der Hohlraum (76) dafür ausgelegt ist, die Antriebsmittel (56, 66; 56, 90) mindestens zum Teil aufzunehmen.

8. Ventil nach Anspruch 7, **dadurch gekennzeichnet, dass** der zweite Endteil (62) des starren Bügels (56) in dem Hohlraum (76) untergebracht ist.

9. Ventil nach einem der Ansprüche 7 oder 8, **dadurch gekennzeichnet, dass** die den Hohlraum (76) begrenzende Wand (77) des Gehäuses (12) eine durchgehende Öffnung aufweist, die dafür ausgelegt ist, einen feststehenden Teil der Antriebsvorrichtung (66; 90) oder einen Stopfen (86) lösbar aufzunehmen.

10. Wärmekraftmaschine, die mit einem Kreis zum Umlauf eines Fluids zur Kühlung der Maschine versehen ist, wobei dieser Kreis (100) Mittel (106) zur Mitnahme des Fluids, Wärmetauschmittel (104), die in der Lage sind, das Fluid zu kühlen, und ein Ventil (10) nach einem der vorhergehenden Ansprüche umfasst, sowie Verbindungsmittel zwischen dem Ventil und der Wärmekraftmaschine (102), die dafür ausgelegt sind, in Abhängigkeit von der Stellung der Regelungsbuchse (22) mindestens einen Teil des Kühlfluids nach Durchquerung der Wärmetauschmittel zu der Maschine zu leiten.
